# EUROPÄISCHE PATENTSCHRIFT

(11) **EP 0 979 510 B1**
(45) Veröffentlichungstag und Bekanntmachung des Hinweises auf die Patenterteilung: **15.01.2003**
(21) Anmeldenummer: 98931992.6
(22) Anmeldetag: 21.04.1998
(51) Int. Cl.: G11B 33/04

(54) **VERSANDVERPACKUNG MIT EINEM SCHEIBENFÖRMIGEN INFORMATIONSTRÄGER SOWIE EIN VERFAHREN UND EINE EINRICHTUNG ZUR HERSTELLUNG DERSELBEN**
DELIVERY PACKAGING WITH A DISC-SHAPED INFORMATION CARRIER, AND A METHOD AND DEVICE FOR PRODUCING THE SAME
EMBALLAGE D'EXPEDITION COMPORTANT UN SUPPORT D'INFORMATION DISCO DE, AINSI QUE PROCEDE ET DISPOSITIF POUR FABRIQUER CET EMBALLAGE

(30) Priorität: 22.04.1997 DE 29707614 U; 12.05.1997 DE 19720999; 04.11.1997 DE 19749968; 05.12.1997 DE 29722205 U
(43) Veröffentlichungstag der Anmeldung: 16.02.2000
(73) Patentinhaber: Prefix GmbH Agentur für Multimedia und Musik, 50670 Köln (DE)
(72) Erfinder: HILLE, Morris, D-50733 Köln (DE); MÜCK, Thomas, D-92318 Neumarkt (DE); TRAPP, Stefan, D-51503 Rösrath (DE)
(74) Vertreter: Bauer, Wulf, Dr.
(86) Internationale Anmeldenummer: DE9801143
(87) Internationale Veröffentlichungsnummer: WO98048423

(56) Entgegenhaltungen:
- WO-A-95/35247
- DE-A- 19 634 301
- FR-A- 2 735 750
- GB-A- 2 287 689
- US-A- 5 472 083

## Beschreibung

Die Erfindung bezieht sich auf eine Anordnung gemäß dem Oberbegriff des Anspruchs 1.

Es ist bekannt, zum Schutz vor Beschädigungen scheibenförmige Informationsträger in Behältern oder Hüllen unterschiedlicher Art aufzubewahren.

Aus der GB-A-2 290 526 ist ein Verfahren bekannt, mittels welchem Kleinserien von Informationsträgern beschriftet werden können. Die Beschriftung erfolgt in Form von bedruckten Aufklebern, die auf die Oberfläche des Informationsträgers aufgebracht werden. Somit ist es notwendig die CD zur Beschriftung zusätzlich zu bekleben.

Die EP-A-0 599 655 offenbart eine Schutzfolie, die auf die informationtragende, opto-elektronisch lesbare Seite eines Informationsträgers aufgebracht wird. Diese Schutzfolie dient vor allem dem Zweck, ein Verkratzen der Rückseite bei Benutzung des Informationsträgers zu verhindern oder einen Informationsträger mit bereits beschädigter Rückseite wieder opto-elektronisch lesbar zu machen.

Die WO-95 35247 beschreibt eine Verpackung für scheibenförmige Informationsträger, bestehend aus einem zu einer Tasche gefalteten Material. Die Innenflächen dieser Tasche können zum Schutz des Informationsträgers beschichtet werden. Weiterhin ist vorgesehen, dass ein Abrissstreifen auf die zusammengefaltete Verpackung aufgebracht wird, der mit Informationen insbesondere einer Adressierung und Frankierung versehen werden kann.

Aus der DE-A-44 03 171 ist weiterhin bekannt, dass CDs während des Fertigungsprozesses mittels eines Laserstrahls individuell kodiert werden können. Diese Kodierung hat zum Ziel Raubkopien zu erschweren.

Die EP-A-0297668 offenbart ebenfalls eine individuelle Kennzeichnung von CDs mittels individuellem Bedrucken zum Zwecke der Kontrolle von Urheberschutzrechten.Eine aufwendig zu faltenden Faltschachtel zum Versand bzw. zur Verpackung von CDs ist weiterhin aus der DE-A-4424023 bekannt.

Durch die DE 195 10 701 AI ist eine Hülle zur Aufnahme mindestens eines scheibenförmigen Informationsträgers, insbesondere einer Compactdisc mit mindestens einer aus Kunststofffolie gebildeten, durch eine Lasche verschließbaren, Tasche bekannt. Die, der mit Informationen versehenen Seite des Informationsträgers zugewandte, Innenseite der Hülle ist durch eine Schutz- bzw. Schonfolie abgedeckt. Die Schutz- bzw. Schonfolie ist dabei von einer durchscheinenden Vliesmaterialfolie gebildet.

Verschiedene jeweils relativ aufwendig herzustellende CD-Verpackungen sind auch aus den Druckschriften DE-A-19634301, US-A-5472083A und FR-A-2735750A bekannt.

Ein bekannter Behälter zur Aufbewahrung einer CD ist eine aufklappbare Hartkunststoffbox. Der Deckel der Hartkunststoffbox ist durchsichtig. Die CD liegt in einer muldenförmigen Vertiefung mit ihrer Abspielfläche auf dem Boden der Mulde auf. Die Seite mit den optisch lesbaren Informationen, insbesondere dem Titel und dem Inhalt der Aufzeichnungen auf der CD, ist dem durchsichtigen Deckel der Hartkunststoffbox zugewandt und durch diese sichtbar. Der Versand einer CD in einer Hartkunststoffbox erfolgt in Spezialkartons. Eine derartige Hartkunststoffbox hat einen sehr großen Platzbedarf und benötigt einen hohen Verpackungsaufwand.

Damit besteht durch die erforderliche Beseitigung der Versandverpackung und auch der Hartkunststoffbox ein potentielles Problem der Umweltverschmutzung.

Mit der Hülle ist es möglich, den Verpackungsaufwand zu reduzieren. Bei einem Einzelversand einer Compactdisc in einer derartigen Hülle sind jedoch ebenfalls eine zusätzliche Verpackung in einem Spezialkarton sowie eine individuelle Adressierung und Frankierung auf dem Spezialkarton erforderlich.

Damit erfordert der Einzelversand in der Hülle einen zusätzlichen Aufwand, ebenso die Beseitigung der Verpackung.

Der Erfindung liegt die Aufgabe zugrunde, eine Versandverpackung mit einem scheibenförmigen, opto-elektronischen Informationsträger, wie eine Compactdisc (CD), eine Videodisc (LCD), eine Mikrocompactdisc (MCD), eine Digital-Versatile-Disc (DVD), wobei der Informationsträger eine Abspielfläche für opto-elektronisch abspielbare und vorzugsweise digital aufgezeichnete Informationen sowie eine Lesefläche mit unmittelbaren lesbaren Informationen aufweist sowie ein Verfahren und eine Einrichtung zur Herstellung der Versandverpackung, zu schaffen, mit welcher der Aufwand an Verpackung, Adressierung usw. für einzeln zu versendende Informationsträger verringert wird.

Erfindungsgemäß wird die Aufgabe durch die Merkmale des Anspruchs 1 gelöst. Vorteilhaft ist es, daß die Lesefläche weitere freie Flächen für eine vor dem Versand aufzubringende Zertifizierung in Form von Nummern, einem Strichcode und/oder Buchstaben und/oder die aufzubringende Frankierung aufweist.

Damit kann die Sendung in einfacher Weise freigemacht und durch die Post versandt werden.

Mit dieser Lösung ist eine Versandverpackung geschaffen, die einen weltweiten Versand von optisch abspielbaren, scheibenförmigen Informationsträgern mit unterschiedlichen Versandunternehmen, wie der öffentlichen Post, aber auch privaten Kurierdiensten, ermöglicht.

Die Versandverpackung ist so ausgebildet, daß unmittelbar auf dem scheibenförmigen Informationsträger freie Flächen angeordnet sind, auf die Informationen aufgebracht werden können, die für den Versand wesentlich sind.

Hierbei kann die Lesefläche als eine als oberste Schicht auf dem Informationsträger aufgebrachte Druckfläche ausgebildet sein. Die Lesefläche kann auch als eine mit dem Informationsträger fest verbundene Klebefolie ausgebildet sein.

Weiterhin ist es möglich, daß die Lesefläche als ein mit dem Informationsträger fest verbundenes Blatt aus Papier, vorzugsweise in Form von Karton, ausgebildet ist.

Vorteilhafterweise kann auf der Lesefläche als Schutzschicht eine abziehbare Klebefolie aufgebracht sein. Die abziehbare Klebefolie kann dabei als eine zweite Lesefläche ausgebildet sein, die eine freie Fläche für eine vor dem Versand aufzubringende Personalisierung aufweist.

Zweckmäßigerweise kann die abziehbare Klebefolie weitere freie Flächen für eine vor dem Versand aufzubringende Zertifizierung und/oder die vor dem Versand aufzubringende Frankierung aufweisen.

Auf diese Weise ist es möglich, die abziehbare Klebefolie als für den Versand wesentliche Fläche auszubilden, während die mit dem Informationsträger fest verbundene Klebefolie oder Druckfläche mit Informationen über den Inhalt des Informationsträgers versehen ist.

Zur Sicherung der Abspielfläche ist es vorteilhaft, daß die Schutzschicht auf der Abspielfläche als eine abziehbare Einweg- oder Mehrfachklebefolie ausgebildet ist.

Die Lesefläche kann weiterhin eine Beschriftung mit einer freien Fläche für die Anrede des Adressaten und weitere individuelle Hinweise aufweisen.

Zweckmäßig ist es, wenn die Versandhülle im Bereich der Personalisierung und im Bereich für die Zertifizierung sowie für die Frankierung eine durchsichtige Fläche aufweist.

Um auch für kleine, scheibenförmige Informationsträger, wie MCD oder DVD, eine einfache Versandverpackung schaffen zu können, ist es vorteilhaft, daß die Lesefläche auf einem steifen Träger, wie einer Pappe, angeordnet ist, wobei der Träger eine größere Fläche als der Informationsträger aufweist und lösbar mit diesem verbunden ist, wobei auf dem Informationsträger eine weitere Lesefläche angeordnet ist.

Damit ist die Deckschicht ausreichend groß, um die freie Fläche für die Personalisierung, aber auch freie Flächen für eine Frankierung und Zertifizierung vorsehen zu können.

Die Deckschicht bildet dabei gleichzeitig einen sicheren Schutz für die zum Versand kommenden kleineren Informationsträger. Die Deckschicht besteht dabei aus einem steifen Material, wie Karton.

Eine bevorzugte Ausführung der Versandverpackung besteht darin, daß die Personalisierung und, soweit aufzubringen, die Zertifizierung, die Frankierung sowie die Individualisierung vor dem Versand auf die entsprechenden freien Flächen der Lesefläche aufgedruckt sind.

Weiterhin ist es möglich, daß die Personalisierung und, soweit aufzubringen, die Zertifizierung, die Frankierung sowie die Individualisierung auf den entsprechenden freien Flächen der Lesefläche mindestens teilweise durch einen Aufkleber und/oder mit einem Stempel und/oder handschriftlich aufgebracht sind, wobei die nicht auf diese Weise aufgebrachten Informationen aufgedruckt sind.

In weiterer Ausbildung der Erfindung umfaßt diese ein Verfahren nach Anspruch 12.

Vorzugsweise werden die auf die Lesefläche aufzubringenden speziellen, von Informationsträger zu Informationsträger unterschiedlichen, Informationen gleichzeitig mit den allgemeinen, für eine Anzahl von Informationsträgern gleichen, Informationen aufgedruckt.

Es ist aber auch möglich, daß die speziellen Informationen mindestens teilweise durch einen Aufkleber und/oder mit einem Stempel und/oder handschriftlich aufgebracht werden, wobei die nicht auf diese Weise aufgebrachten Informationen aufgedruckt werden.

Weiterhin können die speziellen Informationen zumindest teilweise handschriftlich aufgebracht werden.

Eine weitere Ausbildung der Erfindung besteht in einer Einrichtung nach Anspruch 16.

Vorzugsweise ist die Einrichtung so ausgebildet, daß die Vorrichtung zum Auftragen der Informationsdaten eine Druckvorrichtung für die allgemeinen und individuellen Daten ist.

Eine weitere Möglichkeit zur Ausbildung der Einrichtung besteht darin, daß die Vorrichtung zum Auftragen der Informationsdaten aus einer Druckvorrichtung und/oder einer Vorrichtung zum Aufbringen von Aufklebern und/oder einer Stempelvorrichtung besteht.

Die Erfindung wird anhand der Zeichnungen näher erläutert. In den zugehörigen Zeichnungen zeigen:
- Fig. 1: die Vorderansicht einer Compactdisc mit einer aufgebrachten Deckschicht als Lesefläche,
- Fig. 2: die Seitenansicht der Compactdisc nach Fig. 1,
- Fig. 3: die Vorderansicht einer Compactdisc mit einer als oberste Schicht aufgebrachten Druckfläche,
- Fig. 4: die Vorderansicht einer Compactdisc in einer Versandhülle,
- Fig. 5: die Seitenansicht der Compactdisc in einer Versandhülle nach Fig. 4,
- Fig. 6: eine schematische Darstellung einer Einrichtung zur Herstellung von Versandverpackungen mit einem scheibenförmigen, opto-elektronischen Informationsträger.

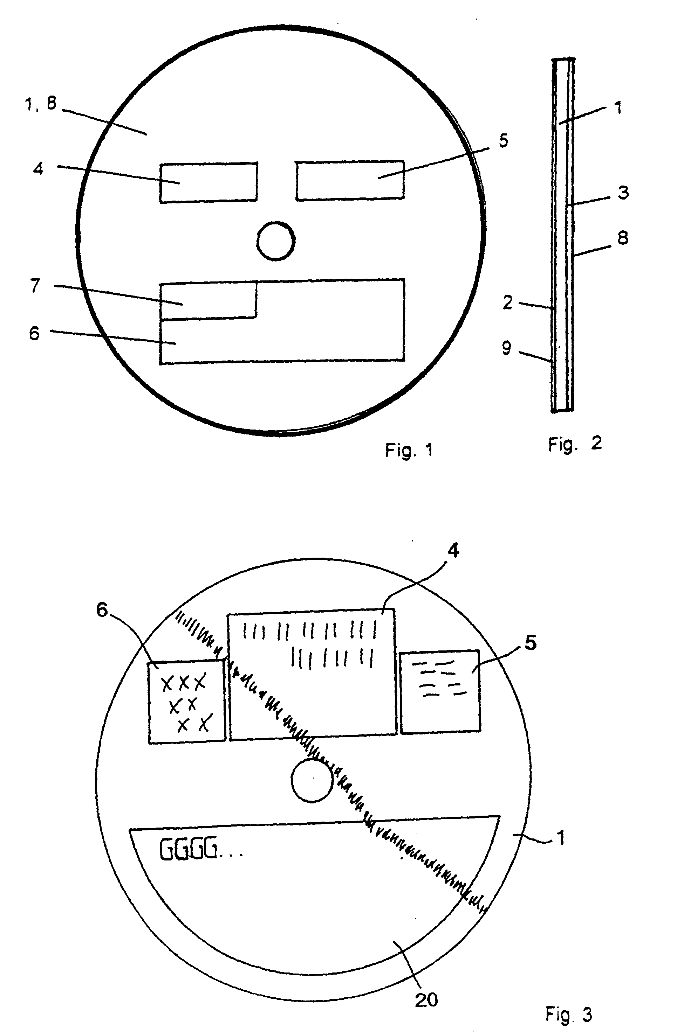

In Fig. 1 und 2 ist ein scheibenförmiger Informationsträger in Form einer Compactdisc gezeigt. Die Compactdisc 1 weist eine Abspielfläche 2 und eine Lesefläche 3 auf.

Die Abspielfläche 2 ist von einer Schutzschicht 9 bedeckt. Die Schutzschicht 9 besteht aus einer Klebefolie. Sie ist von der Abspielfläche 2 abziehbar. Dabei kann es eine Einwegoder Mehrfachklebefolie sein.

Bei der in Fig. 1 und 2 dargestellten Compactdisc 1 ist auf der Seite der Lesefläche 3 eine Deckschicht 8 als eine mit dem Informationsträger fest verbundene Klebefolie bzw. als ein fest verbundenes Blatt Papier, vorzugsweise in Form von Karton, angeordnet. Die Deckschicht 8 ist dabei selbst als Lesefläche 3 ausgebildet und mit unmittelbar lesbaren Informationen versehen. Sie weist mindestens eine freie Fläche für eine Personalisierung 4 auf. Hierbei kann die freie Fläche für den Adressaten und/oder den Adressanten vorgesehen sein. Es kann auch eine freie Fläche für eine vor dem Versand aufzubringende Zertifizierung in Form von Nummern, einem Strichcode und/oder Buchstaben ausgebildet sein. Dabei kann die freie Fläche für die Personalisierung 4 zusammenhängend die freie Fläche für den Adressaten und den Adressanten sowie die Zertifizierung sein. Weiterhin kann die Lesefläche 3 eine freie Fläche für eine Frankierung 5 aufweisen.

Die Versandverpackung der Compactdisc 1 besteht, wie dargestellt, aus der Schutzschicht 9 auf der Abspielfläche 2 und der Deckschicht 8 mit den freien Flächen für die Personalisierung 4 sowie für die Zertifizierung und die Frankierung 5. Eine weitere Verpackung ist nicht erforderlich.

Weiterhin kann die Deckschicht eine freie Fläche für eine Beschriftung 6 mit einer freien Fläche für eine Individualisierung 7 aufweisen. Die Individualisierung 7 besteht vorzugsweise in der Anrede des Adressaten und in weiteren individuellen Hinweisen an diesen. Vor dem Versand werden die Personalisierung 4 und, wenn gewünscht, die Zertifizierung sowie die Individualisierung 7 eingetragen. Bei einem Versand durch die Post wird die Frankierung 5 beispielsweise mit einer Frankiermaschine aufgebracht. Wenn der Versand durch andere Versandunternehmen, beispielsweise mit Kurier, erfolgt, kann eine Frankierung 5 entfallen.

Auf diese Weise können kostengünstig Seriensendungen beispielsweise als Werbesendungen versandt werden.

Es ist auch möglich, daß auf der Lesefläche 3 als Schutzschicht eine abziehbare Klebefolie aufgebracht ist. Die abziehbare Klebefolie kann als eine zweite Lesefläche 3 ausgebildet sein, die eine freie Fläche für eine vor dem Versand aufzubringende Personalisierung 4 aufweist. Außerdem kann die abziehbare Klebefolie mit weiteren freien Flächen für eine vor dem Versand anzufertigende Zertifizierung und/oder Frankierung 5 versehen sein.

Auf der zweiten Lesefläche 3, die unter der abziehbaren Klebefolie liegt, können dann die Informationen zum Inhalt der Compactdisc 1 aufgebracht sein.

Auf diese Weise ist es möglich, daß der Empfänger der Compactdisc 1 nach Erhalt die obere Klebefolie abzieht und dann auf der zweiten Lesefläche 3 unmittelbar die üblichen Informationen ablesen kann.

In der Fig. 3 ist eine weitere Ausführungsform des Informationsträgers dargestellt. Hierbei ist die obere Schicht der Compactdisc 1 selbst die unmittelbare Lesefläche 3. Bei einer derartigen Ausbildung ist es möglich, die für den Versand erforderlichen Informationen unmittelbar auf das Material, aus dem ein solcher Informationsträger besteht, aufzudrucken.

Die Informationen können aber auch mindestens teilweise durch Aufkleben und/oder mit einem Stempel, insbesondere die Frankierung 5 und/oder handschriftlich, hierbei insbesondere die Individualisierung 7, aufgebracht sein, wobei die nicht auf diese Weise aufgebrachten Informationen aufgedruckt sind. In der Fig. 3 ist die mögliche Ausbildung einer derartigen Lesefläche gezeigt, wobei auf der oberen Hälfte der Compactdisc 1 die freien Flächen für die Personalisierung 4, die Frankierung 5 und die Beschriftung 6 angeordnet sind.

In der unteren Hälfte ist eine weitere Fläche 20 angeordnet. Auf der Fläche 20 sind Informationen über den Inhalt der Abspielfläche 2 aufgebracht.

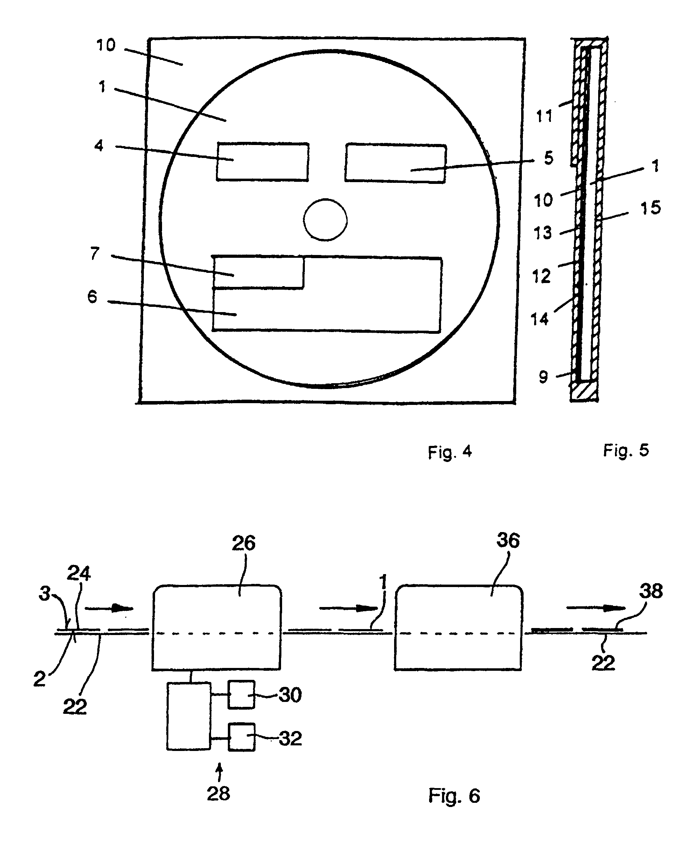

In den Fig. 4 und 5 ist eine weitere Ausbildung einer Versandverpackung für einen scheibenförmigen Informationsträger gezeigt. Die Compactdisc 1 ist in eine Versandhülle 10 eingesteckt. Die Lesefläche 3 weist sowohl als Ausführungsform des Informationsträgers nach Fig. 1 und 2 als auch nach Fig. 3 freie Flächen für eine Personalisierung 4 auf. Weiterhin können freie Flächen für eine Zertifizierung sowie eine Frankierung 5 vorgesehen sein. Außerdem kann die Beschriftung 6 mit der freien Fläche für die Individualisierung 7 vorgesehen sein. Durch die unmittelbare Anordnung insbesondere der Personalisierung 4 und auch der Frankierung 5 auf der Compactdisc 1 ist es möglich, diese in einer unbeschrifteten Versandhülle 10 zu versenden. Die Versandhülle 10 ist mindestens im Bereich der Personalisierung 4 und der Frankierung 5 durchsichtig.

In der Fig. 4 ist eine Versandhülle 10 mit einer Verschlußlasche 11 gezeigt. Die an der Abspielfläche 2 anliegende Seite der Versandhülle 10 bildet die Schutzschicht 9. Die Compactdisc 1 kann in einer derartigen Versandverpackung als Drucksache verschickt werden. Bei Seriensendungen ist dieses besonders kostensparend.

Auf die Abspielfläche 2 kann auch zusätzlich eine abziehbare Einweg- oder Mehrfachklebefolie, wie vorstehend beschrieben, als Schutzschicht 9 aufgebracht sein.

Die Versandhülle 10 ist unterschiedlich gestaltbar.

Einen guten Schutz als Versandverpackung für die Compactdisc 1 bildet eine Versandhülle 10 aus einem biegsamen Kunststoff. Die Versandhülle 10 kann auch aus Papier bestehen und mit Sichtfenstern im Bereich der Personalisierung 4 sowie der Frankierung 5 versehen sein.

In der Versandhülle 10 ist im Bereich der Abspielfläche 2 ein Deckblatt 12, auch in Form eines Faltblattes oder booklets, einsteckbar. Das Deckblatt 12 besteht vorzugsweise aus Papier. Es kann auf der, der Abspielfläche 2 zugewandten, Seite mit einem Schutzvlies 13 versehen sein. Das Deckblatt 12 bildet in diesem Fall die Schutzschicht 9.

In der Versandhülle 10 ist das Deckblatt 12 zwischen der Abspielfläche 2 der Compactdisc 1 und der Innenseite der Versandhülle 10 eingesteckt. Die an der Innenseite der Versandhülle 10 anliegende Seite des Deckblattes 12 kann eine Textseite 14 bilden. Diese kann dann zusätzlich mit schriftlichen Informationen versehen sein. Mit einer durchsichtigen Versandhülle 10 ist der Text von außen lesbar.

Die Versandhülle 10 braucht nicht fortgeworfen zu werden. Sie kann gleichzeitig zur Aufbewahrung der Compactdisc 1 vom Verbraucher benutzt werden.

In nicht dargestellter Weise kann die auf der Lesefläche 3 aufgebrachte Deckschicht 8 eine größere Fläche als der Informationsträger aufweisen. Das ist dann besonders vorteilhaft, wenn diese einen relativ kleinen Durchmesser, wie eine MCD oder eine DVD, aufweist. Dabei besteht die Deckschicht 8 aus einem steifen Material und die Verpackung erfolgt vorzugsweise in einer Versandhülle 10, wie in der Fig. 3 gezeigt.

Wenn ein scheibenförmiger Informationsträger anstelle der Lesefläche 3 mit unmittelbar lesbaren Informationen eine zweite Abspielfläche 2 aufweist, kann die zweite Abspielfläche 2 ebenfalls durch eine Schutzschicht 9 abgedeckt sein. Die Schutzschicht 9 bildet dann eine Lesefläche 3 in Form einer abziehbaren Einweg- oder Mehrfachklebefolie, auf der mindestens die freie Fläche für die Personlisierung 4 angeordnet ist. Die freie Fläche für die Zertifizierung sowie die freie Fläche für die Frankierung 5 sind grundsätzlich ebenfalls vorgesehen.

In Fig. 6 ist eine Einrichtung zum Herstellen von Versandverpackungen mit einem scheibenförmigen, opto-elektronischen Informationsträger dargestellt.

Mit der Einrichtung werden auf die Lesefläche 3 jedes Informationsträgers, hier in Form der Compactdisc 1, Informationen aufgebracht. Die Informationen unterscheiden sich in allgemeine Informationen, die für alle Informationsträger gleich sind, und in spezielle Informationen, die von Informationsträger zu Informationsträger bzw. von Gruppe von Informationsträgern zu Gruppe von Informationsträgern unterschiedlich sind. Die spezielle Information ist die Information, die auf die freie Fläche für die Personalisierung und, soweit vorgesehen, auf weiteren freien Flächen für eine Zertifizierung und eine Frankierung 5 aufgebracht werden. Dazu gehört auch die Individualisierung 7 innerhalb der Beschriftung 6. Anschließend werden die einzelnen Informationsträger versandfertig verpackt.

Mit der in Fig. 6 gezeigten Einrichtung werden die Compactdiscs 1, die bereits auf ihrer Abspielfläche 2 mit opto-elektronischen Informationen versehen sind, auf ihrer Lesefläche 3 aber noch unbehandelt sind, einer Vorrichtung zum Aufbringen von Informationen zugeleitet. Diese Vorrichtung kann, wie in Fig. 6 gezeigt, eine Druckvorrichtung 26 sein. Die Druckvorrichtung 26 ist mit einer Datenverarbeitungsanlage 28 verbunden und wird von dieser gesteuert. Die Datenverarbeitungsanlage 28 weist mindestens einen Speicher 30 für gleiche Informationen und einen Speicher 32 für unterschiedliche Informationen auf. Die gleichen Informationen sind für die Fläche 20 zum Inhalt der Compactdisc 1, aber auch für die Beschriftung 6 außer der Individualisierung 7 vorgesehen. Die Speicher 30 oder Speicher 32 können auch mit einer Frankiervorrichtung verbunden sein, wobei dann die Steuerung anhand der Adresse des Empfängers erfolgt.

Über den Speicher 32 für unterschiedliche Informationen erfolgt das Aufbringen der Personalisierung 4, aber auch der Zertifizierung.

Die Vorrichtung zum Aufbringen von Informationen kann aber auch eine Vorrichtung zum Aufbringen von Aufklebern und auch von Stempelaufdrucken umfassen. Die gesamten Vorrichtungen werden dann über die Datenverarbeitungsanlage 28 gesteuert.

Die Informationsträger werden über eine Fördereinrichtung, wie ein Förderband 22, von der Vorrichtung zum Aufbringen von Informationen, wie der Druckvorrichtung 26, einer Verpakkungsvorrichtung 36 zugeführt und dort mit einer Versandverpackung 38 versehen.

Die Versandverpackung 38 kann dabei ausschließlich aus der auf der Abspielfläche 2 aufgebrachten Schutzschicht 9 bestehen. Es ist aber auch möglich, außer der Schutzschicht 9 noch eine Deckschicht 8, beispielsweise in Form einer Klebefolie, vorzusehen. In diesem Fall ist es vorteilhaft, die Deckschicht 8 vor dem Aufbringen der Informationen auf der Lesefläche anzuordnen und diese dann mit den Informationen zu versehen.

In bevorzugter Weise wird der Informationsträger in einer Versandhülle 10 mit einer Verschlußlasche 11 verpackt (Fig. 4 und Fig. 5).

## Patentansprüche

1. Anordnung bestehend aus einer Versandverpackung und einem darin verpackten scheibenförmigen optoelektronischen Informationsträger, wie eine Compactdisk (CD), eine Videodisk (LCD), eine Microcompactdisk (MCD), eine Digital-Versatile-Disk (DVD), wobei der Informationsträger eine Abspielfläche (2) für opto-elektronisch abspielbare und vorzugsweise digital aufgezeichnete Informationen sowie eine Lesefläche (3) mit unmittelbar lesbaren Informationen aufweist, **dadurch gekennzeichnet, dass** die Lesefläche (3) eine freie Fläche für eine vor dem Versand aufzubringende Personalisierung (4) in Form des Adressaten und /oder des Adressanten aufweist und dass die Abspielfläche (2) durch eine Schutzschicht (9) der Versandverpackung abgedeckt ist, wobei die Versandverpackung die Form einer Versandhülle (10) aufweist, die aus einer glasklaren, durchsichtigen und biegsamen Kunststoffolie besteht, und zwischen den scheibenförmigen Informationsträger und die an die Abspielfläche (2) des scheibenförmigen Informationsträgers angrenzende Innenseite der Versandhülle (10) ein Deckblatt, beispielsweise in Form eines Faltblatts oder booklets, eingeschoben ist, welches die Schutzschicht (9) bildet.

2. Anordnung nach Anspruch 1, **dadurch gekennzeichnet, daß** die Lesefläche (3) weitere freie Flächen für eine vor dem Versand aufzubringende Zertifizierung in Form von Nummern, Strichcode und/oder Buchstaben und/oder die aufzubringende Frankierung (5) aufweist.

3. Anordnung nach Anspruch 1, **dadurch gekennzeichnet, daß** die Lesefläche (3) als eine als oberste Schicht auf dem Informationsträger aufgebrachte Druckfläche ausgebildet ist.

4. Anordnung nach Anspruch 1, **dadurch gekennzeichnet, daß** die Lesefläche (3) als eine mit dem Informationsträger fest verbundene Klebefolie ausgebildet ist.

5. Anordnung nach Anspruch 1, **dadurch gekennzeichnet, daß** die Lesefläche (3) als ein mit dem Informationsträger fest verbundenes Blatt aus Papier, vorzugsweise in Form von Karton, ausgebildet ist.

6. Anordnung nach Anspruch 1, **dadurch gekennzeichnet, daß** auf der Lesefläche (3) als Schutzschicht eine abziehbare Klebefolie aufgebracht ist.

7. Anordnung nach Anspruch 6, **dadurch gekennzeichnet, daß** die abziehbare Klebefolie als eine zweite Lesefläche (3) ausgebildet ist, die eine freie Fläche für eine vor dem Versand aufzubringende Personalisierung (4) sowie weitere freie Flächen für eine vor dem Versand aufzubringende Zertifizierung und/oder die vor dem Versand aufzubringende Frankierung (5) aufweist.

8. Anordnung nach Anspruch 1, **dadurch gekennzeichnet, daß** die Lesefläche (3) eine Beschriftung (6) mit einer freien Fläche für die Anrede des Adressaten und weitere individuelle Hinweise aufweist.

9. Anordnung Anspruch 1, **dadurch gekennzeichnet, daß** die Lesefläche (3) auf einem steifen Träger, wie einer Pappe, angeordnet ist, wobei der Träger eine größere Fläche als der Informationsträger aufweist und lösbar mit diesem verbunden ist, wobei auf dem Informationsträger eine weitere Lesefläche (3) angeordnet ist.

10. Anordnung nach Anspruch 1, **dadurch gekennzeichnet, daß** die Personalisierung (4) und, soweit aufzubringen, die Zertifizierung, die Frankierung (5) sowie die Individualisierung (7) vor dem Versand auf die entsprechenden freien Flächen der Lesefläche (3) aufgedruckt sind.

11. Anordnung nach Anspruch 1, **dadurch gekennzeichnet, daß** die Personalisierung (4) und, soweit aufzubringen, die Zertifizierung, die Frankierung (5) sowie die Individualisierung (7) auf den entsprechenden freien Flächen der Lesefläche (3) mindestens teilweise durch einen Aufkleber und/oder mit einem Stempel und/oder handschriftlich aufgebracht sind, wobei die nicht auf diese Weise aufgebrachten Informationen aufgedruckt sind.

12. Verfahren zum Herstellen einer Anordnung bestehend aus einer Versandverpackung und einem scheibenförmigen, opto-elektronischen Informationsträger nach Anspruch 1, **dadurch gekennzeichnet, daß** auf die Lesefläche (3) sowohl allgemeine, für eine Anzahl von Informationsträgern gleiche, Informationen als auch auf eine freie Fläche eine Personalisierung (4) und, soweit vorgesehen, auf weitere freie Flächen eine Zertifizierung, eine Frankierung (5) sowie eine Individualisierung (7) mit von Informationsträger zu Informationsträger unterschiedlichen Informationen aufgebracht werden und anschließend die einzelnen Informationsträger in einer Versandverpackung gemäß Anspruch 1 versandfertig verpackt werden.

13. Verfahren nach Anspruch 12, **dadurch gekennzeichnet, daß** die auf die Lesefläche (3) aufzubringenden speziellen, von Informationsträger zu Informationsträger unterschiedlichen, Informationen gleichzeitig mit den allgemeinen, für eine Anzahl von Informationsträgern gleichen, Informationen aufgedruckt werden.

14. Verfahren nach Anspruch 12, **dadurch gekennzeichnet, daß** die speziellen Informationen mindestens teilweise durch einen Aufkleber und/oder mit einem Stempel und/oder handschriftlich aufgebracht werden, wobei die nicht auf diese Weise aufgebrachten Informationen aufgedruckt werden.

15. Verfahren nach Anspruch 12, **dadurch gekennzeichnet, daß** die speziellen Informationen zumindest teilweise handschriftlich aufgebracht werden.

16. Einrichtung zur Herstellung von Anordnungen bestehend aus einer Versandverpackung und einem scheibenförmigen, opto-elektronischen Informationsträger nach Anspruch 1, **dadurch gekennzeichnet, daß** die Einrichtung eine Vorrichtung zum Aufbringen der allgemeinen, für eine Anzahl von Informationsträgern gleiche, Informationen sowie eine Vorrichtung zum Aufbringen der speziellen, von Informationsträger zu Informationsträger unterschiedlichen, Informationen sowie eine Vorrichtung zum Verpacken der Informationsträger aufweist, wobei die Vorrichtung zum Aufbringen der Informationen von einer Datenverarbeitungsanlage (28) gesteuert ist, die sowohl erste, allgemeine Daten als auch zweite, individuelle Daten zur Verfügung stellt, die auf die Informationsträger aufgebracht werden.

17. Einrichtung nach Anspruch 16, **dadurch gekennzeichnet, daß** die Vorrichtung zum Auftragen der Informationsdaten eine Druckvorrichtung für die allgemeinen und individuellen Daten ist.

18. Einrichtung nach Anspruch 16, **dadurch gekennzeichnet, daß** die Vorrichtung zum Auftragen der Informationsdaten aus einer Druckvorrichtung und/oder einer Vorrichtung zum Aufbringen von Aufklebern und/oder einer Stempelvorrichtung besteht.

## Claims

1. Arrangement comprising a delivery packaging and a disc-shaped, opto-electronic information carrier packed in said packaging such as a compact disc (CD), a video disc (LCD), a micro compact disc (MCD) or a digital versatile disc (DVD), whereas the information carrier has a playback surface (2) for information, which can be played back opto-electronically and which is preferably digitally recorded, and a read surface (3) with directly readable information, **characterised in that** the read surface (3) is provided with a free area for applying a personalization element (4) prior to shipping and that the playback surface (2) is covered by a protective layer (9) of the delivery packaging, whereas the delivery packaging has the shape of a mailing envelope (10) consisting of a clear, transparent and flexible plastic sheet and whereas a cover sheet designed for example as a folder or as a booklet is inserted between the disc-shaped information carrier and the inner side of the mailing envelope (10), which is adjacent to the playback surface (2) of the disc-shaped information carrier, said cover sheet constituting the protective layer (9).

2. Arrangement according to claim 1, **characterised in that** the read surface (3) is provided with further free areas for a registration code constituted by numbers, a bar code and/or letters, and/or for the stamping (5) which have to be applied prior to shipping.

3. Arrangement according to claim 1 **characterised in that** the read surface (3) is designed as a printing area applied as a top layer onto the information carrier.

4. Arrangement according to claim 1, **characterised in that** the read surface (3) is designed as an adhesive sheet bonded with the information carrier.

5. Arrangement according to claims 1, **characterised in that** the read surface (3) is designed as a sheet of paper bonded on the information carrier, said sheet of paper being preferably cardboard.

6. Arrangement according to claim 1, **characterised in that** the read surface (3) is provided with a protective layer constituted of a strippable adhesive sheet.

7. Arrangement according to claim 6, **characterised in that** the strippable adhesive sheet is designed as a second read surface (3) having a free area onto which a personalization element (4) may be applied prior to shipping as well as further free areas for a registration code and/or for a stamping (5) that have to be applied prior to shipping.

8. Arrangement according to claim 1, **characterised in that** the read surface (3) may also show a caption (6) with a free area for addressing the addressee and for further individual references.

9. Arrangement according to claim 1, **characterised in that** the read surface (3) is arranged on a rigid support such as cardboard, whereas the support's surface is bigger than the information carrier's and is detachably attached to it, another read surface (3) being arranged on the information carrier.

10. Arrangement according to claim 1, **characterised in that** the personalization element (4) and, if required, the registration code, the stamping (5) as well as the individual element (7) are printed onto the corresponding free areas of the read surface (3) prior to shipping.

11. Arrangement according to claim 1, **characterised in that** the personalization element (4) and, if required, the registration code, the stamping (5) as well as the individual element (7) are applied onto the corresponding free areas of the read surface (3) at least partially by means of a sticker and/or a stamp and/or by handwriting, whereas the information, which is not applied by any of these means, is printed.

12. Method for producing an arrangement consisting of a delivery packaging and of a disc-shaped, opto-electronic information carrier according to claim 1, **characterised in that** general information, which is the same for quite a number of information carriers, as well as, on a free area, a personalization element (4), and, where required, on further free areas, a registration code, a stamping (5) and an individualisation element (7) consisting of information varying from one information carrier to the other are applied onto the read surface (3) before the individual information carriers are packaged in a delivery packaging according to claim 1 so as to be ready for dispatch.

13. Method according to claim 12, **characterised in that** the specific information which has to be applied onto the read surface (3) and which varies from one information carrier to the other is printed simultaneously with the general information, which is the same for quite a number of information carriers.

14. Method according to claim 13, **characterised in that** the specific information is at least partially applied by means of a sticker and/or a stamp and/or by handwriting, whereas the information, which is not applied by any of these means, is printed.

15. Method according to claim 15, **characterised in that** the specific information is at least partially hand-written.

16. Device for producing an arrangement consisting of a delivery packaging and a disc-shaped, opto-electronic information carrier according to claim 1, **characterised in that** the device is provided with a facility for applying the general information, which is the same for quite a number of information carriers, as well as with a facility for applying the specific information that varies from one information carrier to the other, as well as a facility for packaging the information carrier, the facility for applying the information being controlled by a computer (28) which is providing first, general data as well as second, individual data, said data being applied onto the information carriers.

17. Device according to claim 16, **characterised in that** the facility for applying the information data is a printing facility for the general and the individual data.

18. Device according to claim 16, **characterised in that** the facility for applying the information data is composed of a printing facility and/or a facility for applying stickers and/or a stamping facility.

## Revendications

1. Disposition se composant d'un emballage d'expédition et d'un support d'informations opto-électronique en forme de disque y emballé, tel qu'un disque compact (CD), un disque vidéo (LCD), un micro-disque compact (MCD), un DVD, ledit support d'informations présentant une surface à jouer (2) pour des informations qui peuvent être jouées de façon opto-électronique et qui, de préférence, sont enregistrées de façon numérique, ainsi qu'une surface de lecture (3) avec des informations qui peuvent être lues immédiatement, **caractérisée par le fait que** ladite surface de lecture (3) présente une zone libre pour une personnalisation (4) à appliquer avant l'expédition, sous forme du destinataire et/ou de l'expéditeur, et que ladite surface à jouer (2) est recouverte par une couche protectrice (9) de l'emballage d'expédition, l'emballage d'expédition présentant la forme d'une enveloppe d'expédition (10) qui se compose d'une feuille claire, transparente et flexible en matière synthétique, et une feuille de couverture, par exemple sous forme d'un dépliant ou d'une brochure (booklet), qui forme la couche protectrice (9) étant insérée entre le support d'informations en forme de disque et la face intérieure de l'enveloppe d'expédition (10), qui est contiguë à la surface à jouer (2) du support d'informations en forme de disque.

2. Disposition selon la revendication 1, **caractérisée par le fait que** la surface de lecture (3) présente d'autres zones libres pour une certification à appliquer avant l'expédition, sous forme de numéros, de codes à barres et/ou de lettres, et/ou pour l'affranchissement (5) à appliquer.

3. Disposition selon la revendication 1, **caractérisée par le fait que** la surface de lecture (3) est réalisée comme une surface d'impression appliquée en tant que couche supérieure sur le support d'informations.

4. Disposition selon la revendication 1, **caractérisée par le fait que** la surface de lecture (3) est réalisée comme une feuille adhésive liée solidement au support d'informations.

5. Disposition selon la revendication 1, **caractérisée par le fait que** la surface de lecture (3) est réalisée comme une feuille en papier, de préférence sous forme de carton, qui est solidement liée au support d'informations.

6. Disposition selon la revendication 1, **caractérisée par le fait qu'**une feuille adhésive détachable est appliquée comme couche protectrice sur la surface de lecture (3).

7. Disposition selon la revendication 6, **caractérisée par le fait que** ladite feuille adhésive détachable est réalisée comme une deuxième surface de lecture (3) qui présente une zone libre pour une personnalisation (4) à appliquer avant l'expédition ainsi que d'autres zones libres pour une certification à appliquer avant l'expédition et/ou pour l'affranchissement (5) à appliquer avant l'expédition.

8. Disposition selon la revendication 1, **caractérisée par le fait que** la surface de lecture (3) présente une inscription (6) avec une zone libre pour s'adresser au destinataire et pour d'autres mentions individuelles.

9. Disposition selon la revendication 1, **caractérisée par le fait que** la surface de lecture (3) est disposée sur un support rigide, tel qu'un carton, ledit support présentant une plus grande surface que le support d'informations et étant lié de manière amovible à celui-ci, une autre surface de lecture (3) étant disposée sur le support d'informations.

10. Disposition selon la revendication 1, **caractérisée par le fait que** la personnalisation (4) et, s'il faut l'appliquer, la certification, l'affranchissement (5) ainsi que l'individualisation (7) sont imprimés avant l'expédition sur les zones libres correspondantes de la surface de lecture (3).

11. Disposition selon la revendication 1, **caractérisée par le fait que** la personnalisation (4) et, s'il faut l'appliquer, la certification, l'affranchissement (5) ainsi que l'individualisation (7) sont appliqués sur les zones libres correspondantes de la surface de lecture (3) au moins en partie par un autocollant et/ou avec un timbre et/ou par écrit, les informations qui ne sont pas appliquées de cette manière étant imprimées.

12. Procédé de fabrication d'une disposition se composant d'un emballage d'expédition et d'un support d'informations opto-électronique en forme de disque selon la revendication 1, **caractérisé par le fait que** l'on applique sur la surface de lecture (3) aussi bien des informations générales qui sont les mêmes pour un nombre de supports d'informations, que, sur une zone libre, une personnalisation (4) et, si prévu, sur d'autres zones libres, une certification, un affranchissement (5) ainsi qu'une individualisation (7) avec des informations variant d'un support d'informations à l'autre, et que, ensuite, les supports individuels d'informations sont emballés dans un emballage d'expédition selon la revendication 1 de manière à être prêts pour l'expédition.

13. Procédé selon la revendication 12, **caractérisé par le fait que** les informations spéciales à appliquer sur la surface de lecture (3), qui varient d'un support d'informations à l'autre, sont imprimées simultanément avec les informations générales qui sont les mêmes pour un nombre de supports d'informations.

14. Procédé selon la revendication 12, **caractérisé par le fait que** les informations spéciales sont appliquées au moins en partie par un autocollant et/ou avec un timbre et/ou par écrit, les informations qui ne sont pas appliquées de cette manière étant imprimées.

15. Procédé selon la revendication 12, c**aractérisé par le fait** que les informations spéciales sont appliquées au moins en partie par écrit.

16. Installation de fabrication de dispositions se composant d'un emballage d'expédition et d'un support d'informations opto-électronique en forme de disque selon la revendication 1, **caractérisée par le fait que** ladite installation présente un dispositif destiné à appliquer les informations générales qui sont les mêmes pour un nombre de supports d'informations, ainsi qu'un dispositif d'application des informations spéciales qui varient d'un support d'informations à l'autre, ainsi qu'un dispositif destiné à emballer les supports d'informations, le dispositif destiné à appliquer les informations étant commandé par une installation de traitement de données (28) qui met à la disposition aussi bien les premières données générales que les secondes données individuelles qui sont appliquées sur les supports d'informations.

17. Installation selon la revendication 16, **caractérisée par le fait que** le dispositif d'application des données d'information est un dispositif d'impression pour les données générales et pour les données individuelles.

18. Installation selon la revendication 16, **caractérisée par le fait que** le dispositif d'application des données d'information se compose d'un dispositif d'impression et/ou d'un dispositif destiné à appliquer des autocollants et/ou d'un dispositif à timbrer.
